# EUROPÄISCHE PATENTANMELDUNG

(11) **EP 1 366 842 A1**
(43) Veröffentlichungstag der Anmeldung: **03.12.2003**
(21) Anmeldenummer: 03010951.6
(22) Anmeldetag: 16.05.2003
(51) Int. Cl.: B23B 29/24

(54) **Mehrfachwerkzeughalter für eine Drehmaschine, insbesondere für einen Langdrehautomaten**

(30) Priorität: 29.05.2002 DE 10224126
(71) Anmelder: Graf, Ernst, 78661 Dietingen (DE)
(72) Erfinder: Graf, Ernst, 78661 Dietingen (DE)
(74) Vertreter: Späth, Dieter, Dipl.-Ing.

(57) **Zusammenfassung**

Die Erfindung betrifft einen Mehrfachwerkzeughalter für eine nicht dargestellte Drehmaschine, insbesondere für einen Langdrehautomaten. Die Erfindung schlägt vor, den Mehrfachwerkzeughalter (10) als Linearhalter mit einer Anzahl Einzelwerkzeughaltern (18) auszubilden, die unabhängig voneinander wechselbar sind. Die Erfindung hat den Vorteil, dass das Einspannen und insbesondere das Wechseln eines einzelnen Drehstahls (36) vereinfacht ist.

## Beschreibung

Die Erfindung betrifft einen Mehrfachwerkzeughalter für eine Drehmaschine, insbesondere für einen Langdrehautomaten, mit den Merkmalen des Oberbegriffs des Anspruchs 1.

Derartige Mehrfachwerkzeughalter sind an sich bekannt. Sie weisen eine Einrichtung auf, mit der sie positioniert an der Drehmaschine befestigbar sind. Am Mehrfachwerkzeughalter sind mehrere Werkzeuge, insbesondere Drehstähle befestigbar, von denen beim Drehen jeweils eins zum Schnitt gebracht wird. Beim Befestigen wird jedes Werkzeug exakt in eine vorgegebene Position am Mehrfachwerkzeughalter ausgerichtet (positioniert) oder es wird nach dem Befestigen die Position jedes Werkzeugs am Mehrfachwerkzeughalter festgestellt, so dass sie bei numerisch gesteuerten Drehmaschinen berücksichtigt werden kann. Das Befestigen und Positionieren oder Feststellen der Position der Werkzeuge am Mehrfachwerkzeughalter erfolgt außerhalb der Drehmaschine, erfordert also keinen Stillstand der Drehmaschine. Zu einem Werkzeugwechsel wird der Mehrfachwerkzeughalter gewechselt, so dass der Werkzeugwechsel nur kurze Zeit in Anspruch nimmt. Da die Position der Werkzeuge am Mehrfachwerkzeughalter bekannt und der Mehrfachwerkzeughalter an der Drehmaschine positioniert ist kann das Drehen unmittelbar nach dem Wechsel des Mehrfachwerkzeughalters fortgesetzt werden. Rüstzeiten, die einen Stillstand der Drehmaschine erfordern, sind dadurch kurz. Nachteilig ist allerdings, dass das Positionieren der Werkzeuge beim Befestigen am Mehrfachwerkzeughalter oder das Feststellen der exakten Position der Werkzeuge am Mehrfachwerkzeughalter aufwendig ist. Ein Wechsel eines oder mehrerer Werkzeuge am Mehrfachwerkzeughalter ist infolge dessen aufwendig.

Der Erfindung liegt die Aufgabe zugrunde, einen Mehrfachwerkzeughalter der vorstehend erläuterten Art vorzuschlagen, der einen Wechsel eines oder mehrerer Werkzeuge vereinfacht.

Diese Aufgabe wird erfindungsgemäß durch die Merkmale des Anspruchs 1 gelöst. Der erfindungsgemäße Mehrfachwerkzeughalter weist eine Anzahl Einzelwerkzeughalter auf, in die jeweils ein Werkzeug einspannbar ist. Für jeden Einzelwerkzeughalter weist der erfindungsgemäße Mehrfachwerkzeughalter eine Einrichtung zum lösbaren Befestigen des Einzelwerkzeughalters am Mehrfachwerkzeughalter und eine Positioniereinrichtung, die den Einzelwerkzeughalter beim Befestigen am Mehrfachwerkzeughalter positioniert, auf. Dadurch ist ein problemloses und schnelles Wechseln eines oder mehrerer Einzelwerkzeughalter möglich, wobei der eingewechselte Einzelwerkzeughalter exakt am Mehrfachwerkzeughalter positioniert ist. Die Erfindung hat den Vorteil, dass ein in einen Einzelwerkzeughalter eingespanntes Werkzeug schnell und mit geringem Aufwand auswechselbar und der Mehrfachwerkzeughalter schnell wieder einsatzbereit ist.

Als Einrichtung zum Befestigen und Positionieren der Einzelwerkzeughalter sieht eine Ausgestaltung der Erfindung eine Schwalbenschwanzhalterung vor. Eine Schwalbenschwanzhalterung hat den Vorteil, dass sie vergleichsweise einfach und preisgünstig herstellbar ist, dass sie stabil, d.h. zur Übertragung hoher Kräfte, ausbildbar ist und eine hohe Positioniergenauigkeit aufweist. Zudem bildet eine Schwalbenschwanzhalterung sowohl die Einrichtung zum Befestigen der und die Positioniereinrichtung für die Einzelwerkzeughalter.

Die Einrichtung zum Befestigen des Einzelwerkzeughalters und die Positioniereinrichtung können verschiedene Einrichtungen oder teilweise oder vollständig einheitliche Einrichtungen sein. Der Mehrfachwerkzeughalter kann Elemente aufweisen, die sowohl Teil der Einrichtung zum Befestigen als auch Teil der Positioniereinrichtung eines Einzelwerkzeughalters sind.

Eine Ausgestaltung der Erfindung sieht die Ausbildung des Mehrfachwerkzeughalters als Linearhalter vor. Dies bedeutet, dass die Einzelwerkzeughalter in einer Ebene über- oder nebeneinander angeordnet sind. Diese Ausgestaltung der Erfindung eignet sich insbesondere für Langdrehautomaten.

Eine Ausgestaltung der Erfindung sieht vor, dass die Positioniereinrichtung so ausgebildet ist, dass sie jeden Einzelwerkzeughalter einzeln und unabhängig von den anderen Einzelwerkzeughaltern in einer Zustellrichtung und/oder in einer Vorschubrichtung am Mehrfachwerkzeughalter positioniert. Mit Zustellrichtung und Vorschubrichtung sind die Bewegungsrichtungen der in die Einzelwerkzeughalter eingespannten Werkzeuge in Bezug auf ein Werkstück beim Drehen gemeint. Die einzelne und von den anderen Einzelwerkzeughaltern unabhängige Positionierung am Mehrfachwerkzeughalter stellt eine genaue Positionierung sicher. Eine genaue Positionierung in Zustellrichtung und Vorschubrichtung ist für eine hohe Maßgenauigkeit beim Drehen wesentlich. Eine Genauigkeit der Positionierung eines Werkzeugs in Bezug auf ein Werkstück "auf Mitte" ist dagegen für die Maßgenauigkeit des Werkstücks von geringerer Bedeutung.

Eine Ausgestaltung der Erfindung sieht vor, dass der Einzelwerkzeughalter ein Werkzeug in einer Vorschubrichtung und/oder bezüglich einer Axialebene eines Werkstücks positioniert aufnimmt. In der oder den beiden anderen Richtungen muss das Werkzeug beim Einspannen in den Einzelwerkzeughalter positioniert werden oder es muss die Abweichung des in den Einzelwerkzeughalter eingespannten Werkzeugs von einer vorgegebenen Sollposition festgestellt und zur Korrektur bei einer numerisch gesteuerten Drehmaschine berücksichtigt werden. Die Positionierung des Werkzeugs im Einzelwerkzeughalter in einer oder zwei Richtungen vereinfacht das Positionieren des Werkzeugs beim Einspannen in den Einzelwerkzeughalter.

Die Erfindung wird nachfolgend anhand eines in der Zeichnung dargestellten Ausführungsbeispiels näher erläutert. Es zeigen:
- Figur 1: eine Ansicht eines erfindungsgemäßen Mehrfachwerkzeughalter gemäß Pfeil I in Figuren 2 und 3;
- Figur 2: eine Seitenansicht des Mehrfachwerkzeughalters aus Figur 1 gemäß Pfeil II in Figur 1; und
- Figur 3: eine Stirnansicht des Mehrfachwerkzeughalters aus Figur 1 gemäß Pfeil III in Figur 1.

Der in der Zeichnung dargestellte, erfindungsgemäße Mehrfachwerkzeughalter 10 ist zur Verwendung in einem nicht dargestellten Langdrehautomaten vorgesehen. Der Mehrfachwerkzeughalter 10 weist eine in der Draufsicht rechteckige Grundplatte 12 auf, an deren einer Schmalseite eine Anschlagleiste 14 angebracht ist. Zur Befestigung des Mehrfachwerkzeughalters 10 an einem Schlitten des Langdrehautomaten sind zwei Durchstecklöcher 16 vorgesehen, die die Anschlagleiste 14 und die Grundplatte 12 durchsetzen. Zur Positionierung sind in der Zeichnung nicht sichtbare, geriebene Löcher in der Grundplatte 12 angebracht, wodurch der Mehrfachwerkzeughalter 10 mittels Passstiften exakt positionierbar ist. Der Mehrfachwerkzeughalter 10 wird vorzugsweise mit einem nicht dargestellten Adapter verschraubt, der einen Schnellwechsel des Werkzeughalters 10 ermöglicht. Die Durchstecklöcher 16 und die geriebenen Löcher in der Grundplatte 12 bilden eine Einrichtung zum positionierten Befestigen des Mehrfachwerkzeughalters 10 an dem Schlitten des nicht dargestellten Langdrehautomaten.

Der Mehrfachwerkzeughalter 10 weist eine Anzahl Einzelwerkzeughalter 18 auf, die nebeneinander lösbar auf der Grundplatte 12 befestigt sind. Im dargestellten und beschriebenen Ausführungsbeispiel der Erfindung weist der Mehrfachwerkzeughalter sechs Einzelwerkzeughalter 18 auf. Einer der Einzelwerkzeughalter 18 ist an der Anschlagleiste 14 anliegend angeordnet, die weiteren Einzelwerkzeughalter 18 liegen am jeweils vorangehenden Einzelwerkzeughalter 18 an.

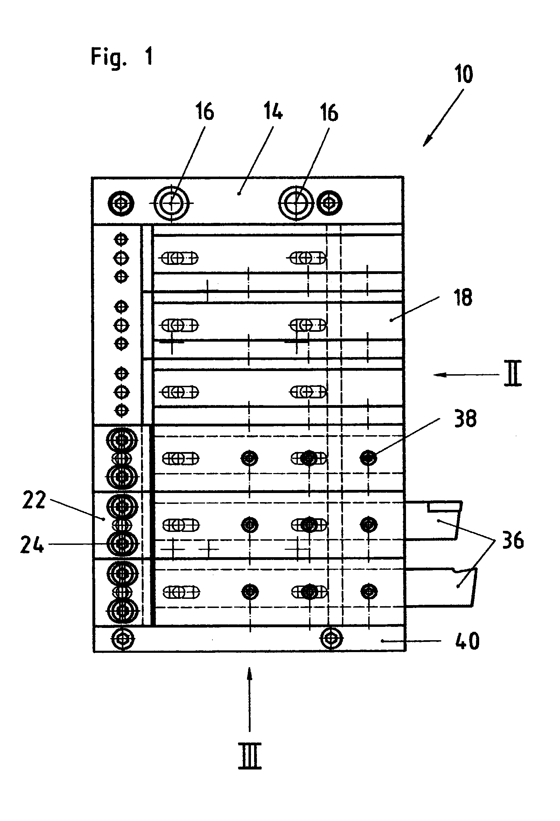

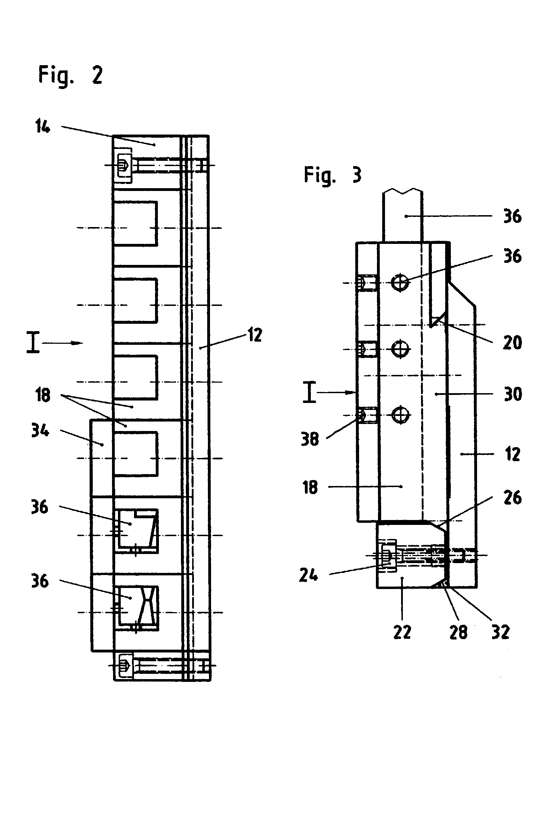

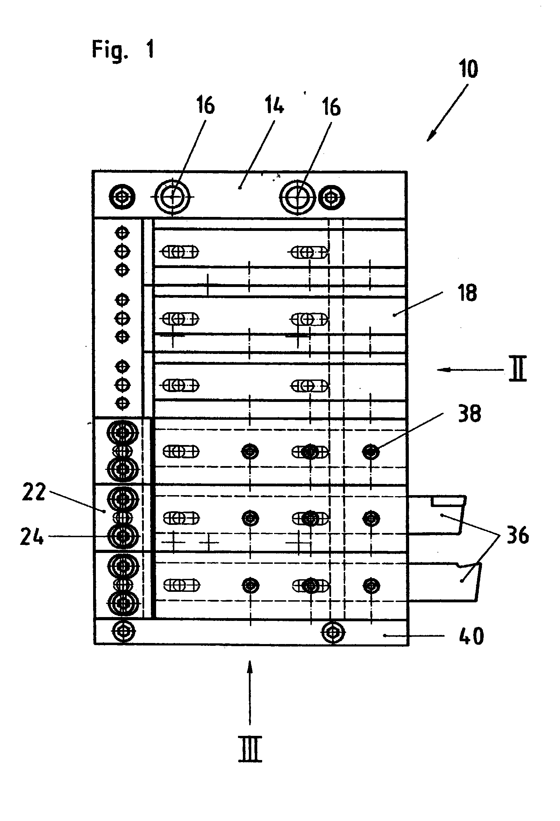

Zum lösbaren Befestigen und zum Positionieren der Einzelwerkzeughalter 18 weist der Mehrfachwerkzeughalter 10 eine Schwalbenschwanzhalterung auf. Zur Ausbildung der Schwalbenschwanzhalterung weist die Grundplatte 12 eine gerade, parallel zu einem Längsrand verlaufende, schräg stehende Hinterschneidung 20 (Figur 3) auf, beispielsweise nach Art einer Führungsbahn einer Schwalbenschwanz-Schiebeführung eines Schlittens einer Werkzeugmaschine. Am anderen Längsrand der Grundplatte 12 ist für jeden Einzelwerkzeughalter 18 ein Klemmklotz 22 vorgesehen, der mit zwei Schrauben 24 mit der Grundplatte 12 verschraubt ist. Die beiden der Grundplatte 12 zugewandten und zu deren Längsrand parallelen Ränder der Klemmklötze 22 weisen Schrägen 26, 28 auf. Jeder Einzelwerkzeughalter 18 weist einen schwalbenschwanz- oder trapezförmigen Ansatz 30 an seiner der Grundplatte 12 zugewandten Seite auf, der die Hinterschneidung 20 der Grundplatte 12 und die der Hinterschneidung 20 zugewandte Schräge 26 des jeweils zugeordneten Klemmklotzes 22 passgenau hintergreift. Die Hinterschneidung 20, die Schrägen 26 der Klemmklötze 22 und der schwalbenschwanz- oder trapezförmige Ansatz 30 bilden die Schwalbenschwanzhalterung 20, 26, 30. Die Schwalbenschwanzhalterung 20, 26, 30 bildet sowohl eine Einrichtung zum Befestigen der Einzelwerkzeughalter 18 am Mehrfachwerkzeughalter 10 als auch eine Positioniereinrichtung zum Positionieren jedes Einzelwerkzeughalters 18 am Mehrfachwerkzeughalter 10. Die Schwalbenschwanzhalterung 20, 26, 30 positioniert jeden Einzelwerkzeughalter 18 einzeln in einer Zustellrichtung und in einer Vorschubrichtung. Die Zustellrichtung ist in Figur 1 nach rechts, die Vorschubrichtung ist in Figur 2 nach rechts.

Die Klemmklötze 22 liegen mit ihrer der Hinterschneidung 20 abgewandten Schräge 28 an einem schrägen Absatz 32 an, der einstückig mit der Grundplatte 12 ist und der gerade entlang ihres einen Längsrandes verläuft.

Die Einzelwerkzeughalter 18 weisen einen U-förmigen Querschnitt auf, sie können offen oder geschlossen ausgeführt sein. In Figuren 1 und 2 sind die oberen drei Einzelwerkzeughalter 18 offen und die unteren drei Einzelwerkzeughalter 18 geschlossen ausgeführt. Die geschlossenen Einzelwerkzeughalter 18 weisen eine Deckplatte 34 auf, die die Einzelwerkzeughalter 18 zu Vierkantrohrprofilen ergänzen. Zum Einspannen eines Werkzeugs, insbesondere eines Drehstahls 36 sind in einer Seitenwand jedes Einzelwerkzeughalters 18 drei Madenschrauben als Spannschrauben 38 angeordnet. Die Spannschrauben 38 sind in einer der Anschlagleiste 14 abgewandten Seitenwand der Einzelwerkzeughalter 18 vorgesehen. Die Spannschrauben 38 befinden sich somit unter dem Drehstahl 36 und drücken die Drehstähle 36 gegen die andere, der Anschlagleiste 14 zugewandte Seitenwand der Einzelwerkzeughalter 18. Auf diese Weise sind die Drehstähle 36 in Bezug auf eine Axialebene eines nicht dargestellten Werkstücks, d.h. "auf Mitte" im Einzelwerkzeughalter 18 positioniert. Durch Anlage an einer der Grundplatte 12 zugewandten Grundseite der Einzelwerkzeughalter 18 sind die Drehstähle 36 in einer Vorschubrichtung in den Einzelwerkzeughaltern 18 positioniert. In den Deckplatten 34 der geschlossenen Einzelwerkzeughalter 18 sind ebenfalls drei Madenschrauben als Spannschrauben 38 angeordnet, mit denen die Drehstähle 36 gegen die Grundseiten der Einzelwerkzeughalter 18 festspannbar sind.

An einer der Anschlagleiste 14 gegenüberliegenden Schmalseite ist eine Abschlussleiste 40 mit der Grundplatte 12 verschraubt, so dass die Einzelwerkzeughalter 18 zwischen der Anschlagleiste 14 und der Abschlussleiste 40 aufgenommen sind.

Der in der Zeichnung dargestellte und beschriebene Mehrfachwerkzeughalter 10 bildet einen sog. Linearhalter, der die Drehstähle 36 oder allgemein Werkzeuge in einer Ebene übereinander hält.

## Patentansprüche

1. Mehrfachwerkzeughalter für eine Drehmaschine, insbesondere für einen Langdrehautomaten, wobei der Mehrfachwerkzeughalter eine Einrichtung zum positionierten Befestigen an der Drehmaschine aufweist, **dadurch gekennzeichnet, dass** der Mehrfachwerkzeughalter (10) eine Anzahl Einzelwerkzeughalter (18) aufweist, in die jeweils ein Werkzeug (36) einspannbar ist, dass der Mehrfachwerkzeughalter (10) für jeden Einzelwerkzeughalter (18) eine Einrichtung (20, 26, 30) zum lösbaren Befestigen des Einzelwerkzeughalters (18) am Mehrfachwerkzeughalter (10) aufweist und dass der Mehrfachwerkzeughalter (10) für jeden Einzelwerkzeughalter (18) eine Positioniereinrichtung (20, 26, 30) aufweist, die den Einzelwerkzeughalter (18) beim Befestigen am Mehrfachwerkzeughalter (10) positioniert.

2. Mehrfachwerkzeughalter nach Anspruch 1, **dadurch gekennzeichnet, dass** der Mehrfachwerkzeughalter (10) eine Schwalbenschwanzhalterung (20, 26, 30) als Einrichtung zum Befestigen der Einzelwerkzeughalter (18) und als Positioniereinrichtung für die Einzelwerkzeughalter (18) aufweist.

3. Mehrfachwerkzeughalter nach Anspruch 1 oder 2, **dadurch gekennzeichnet, dass** der Mehrfachwerkzeughalter (10) als Linearhalter ausgebildet ist.

4. Mehrfachwerkzeughalter nach einem der Ansprüche 1 bis 3, **dadurch gekennzeichnet, dass** die Positioniereinrichtung (20, 26, 30) jeden Einzelwerkzeughalter (18) in einer Zustellrichtung einzeln und unabhängig von den anderen Einzelwerkzeughaltern (18) am Mehrfachwerkzeughalter (10) positioniert.

5. Mehrfachwerkzeughalter nach einem der Ansprüche 1 bis 4, **dadurch gekennzeichnet, dass** die Positioniereinrichtung (20, 26, 30) jeden Einzelwerkzeughalter (18) in einer Vorschubrichtung einzeln und unabhängig von den anderen Einzelwerkzeughaltern (18) am Mehrfachwerkzeughalter (10) positioniert.

6. Mehrfachwerkzeughalter nach einem der Ansprüche 1 bis 5, **dadurch gekennzeichnet, dass** der Einzelwerkzeughalter (18) ein Werkzeug (36) in einer Vorschubrichtung positioniert aufnimmt.

7. Mehrfachwerkzeughalter nach einem der Ansprüche 1 bis 6, **dadurch gekennzeichnet, dass** der Einzelwerkzeughalter (18) ein Werkzeug bezüglich einer Axialebene eines Werkstücks positioniert aufnimmt.
